# FASCICULE DE BREVET EUROPEEN

(11) **EP 2 255 527 B1**
(45) Date de publication et mention de la délivrance du brevet: **30.11.2011**
(21) Numéro de dépôt: 09721061.1
(22) Date de dépôt: 13.03.2009
(51) Int. Cl.: H04N 5/445, G06F 3/00, G06F 19/00

(54) **PROCEDE PERMETTANT LA MISE EN OEUVRE DE LA VIDEO ENRICHIE SUR LES TERMINAUX MOBILES**
VERFAHREN ZUR IMPLEMENTIERUNG VON RICH-VIDEO-INHALTEN AUF MOBILEN ENDGERÄTEN
METHOD FOR IMPLEMENTING RICH VIDEO ON MOBILE TERMINALS

(30) Priorité: 14.03.2008 FR 0801430
(43) Date de publication de la demande: 01.12.2010
(73) Titulaire: Alcatel Lucent, 75007 Paris (FR); Total Immersion, 92150 Suresnes (FR)
(72) Inventeur: POUPEL, Olivier, F-35000 Rennes (FR); OSMOND, Marin, F-35000 Rennes (FR); SAADA, Stéphane, F-35000 Rennes (FR); DUFOSSE, Stéphane, F-91620 Nozay (FR); LEFEVRE, Valentin, F-92150 Suresnes (FR); LIVET, Nicolas, F-92150 Suresnes (FR)
(74) Mandataire: Shamsaei Far, Hassan
(86) Numéro de dépôt international: PCT/EP2009/053021
(87) Numéro de publication internationale: WO 2009/112585

(56) Documents cités:
- EP-A- 1 814 101
- WO-A-03/034397
- GAUSEMEIER ET AL: "Development of a real time image based object recognition method for mobile AR-devices" PROCEEDINGS OF THE 2ND INTERNATIONAL CONFERENCE ON COMPUTER GRAPHICS, VIRTUAL REALITY, VISUALISATION AND INTERACTION IN AFRICA. SESSION: SESSION G: IMAGE-BASED METHODS, [Online] 2003, pages 133-139, XP002488965 Cape Town, South Africa ISBN: 1-58113-643-9 Extrait de l'Internet: URL:http://portal.acm.org/citation.cfm?id= 602355&dl=&coll=> [extrait le 2008-07-18]
- PASMAN W ET AL: "Implementation of an augmented reality system on a PDA" MIXED AND AUGMENTED REALITY, 2003. PROCEEDINGS. THE SECOND IEEE AND AC M INTERNATIONAL SYMPOSIUM ON 7-10 OCT. 2003, PISCATAWAY, NJ, USA,IEEE, 7 octobre 2003 (2003-10-07), pages 276-277, XP010662826 ISBN: 978-0-7695-2006-3
- WAGNER D ET AL: "First steps towards handheld augmented reality" WEARABLE COMPUTERS, 2003. PROCEEDINGS. SEVENTH IEEE INTERNATIONAL SYMP OSIUM ON 21-23 OCT. 2003, PISCATAWAY, NJ, USA,IEEE, 21 octobre 2003 (2003-10-21), pages 127-135, XP010673786 ISBN: 978-0-7695-2034-6
- REGENBRECHT H T ET AL: "A mobile Passive Augmented Reality Device - mPARD" AUGMENTED REALITY, 2000. (ISAR 2000). PROCEEDINGS. IEEE AND ACM INTERN ATIONAL SYMPOSIUM ON MUNICH, GERMANY 5-6 OCT. 2000, PISCATAWAY, NJ, USA,IEEE, US, 5 octobre 2000 (2000-10-05), pages 81-84, XP010520313 ISBN: 978-0-7695-0846-7

## Description

L'invention a trait au domaine des télécommunications, et plus précisément à l'affichage de vidéo enrichie sur les terminaux mobiles.

Si les réseaux de mobiles de deuxième génération (2G) ont introduit la technologie numérique dans les communications sans fil, la troisième génération (3G) - mise en oeuvre notamment par la norme UMTS (Universal Mobile Telecommunications system) - assure la convergence des réseaux fixes et des réseaux de mobiles en intégrant à ces derniers les, services de communication jusque là réservés aux réseaux fixes, grâce notamment à dés débits accrus via l'interface air (jusqu'à 2 Mbit/s). Parmi les services supportés figurent notamment (outre la voix) l'audio, la vidéo, le texte et le graphique, c'est-à-dire les éléments essentiels des applications multimédia. Parallèlement, les terminaux mobiles ont vu leur puissance augmenter, et se comportent désormais comme des ordinateurs standards, qui peuvent mettre en oeuvre non seulement des applications persistantes - qui se déroulent sur le terminal - mais également des applications non persistantes - qui se déroulent sur un serveur distant, le terminal n'effectuant que les opérations de restitution, tel que l'affichage dans les applications vidéo (Cf. Pujolle, Les Réseaux, ed. 2008, Chap. 43, pp. 1004-1012).

L'augmentation combinée de la puissance des terminaux et des débits dans les communications hertziennes permet ainsi de faire tourner sur les terminaux 3G des applications multimédia initialement conçues pour les réseaux fixes dans lesquels les problèmes classiques rencontres dans les réseaux mobiles (accessibilité au réseau, handover, délai de transmission des données) ne se postaient pas. Il en va ainsi de la réalité augmentée, technique dans laquelle des éléments virtuels sont restitués en surimpression sur une scène issue de la réalité. L'une des applications de la réalité augmentée est la vidéo enrichie, dans laquelle une scène filmée est agrémentée, en temps réel, d'éléments visuels tels que du texte ou des images issus d'une base de données multimédia (cf. par exemple la demande de brevet européen n°EP 1 527 599). Cette technique a récemment fait son apparition dans les terminaux mobiles équipés de caméras ; voir par exemple la demande de brevet européen n°EP 1 814 101 ou la demande de brevet américain n°US 2007/0024527.

Les documents XP002488965 (GAUSEMEIER ET AL: "Development of a real time image based object recognition method for mobile AR-devices"), WO 031034397 et XP010662826 (PASMAN W ET AL: "Implementation of an augmented reality system on a PDA") décrivent aussi des tels systèmes de vidéo enrichie.

Cependant les solutions proposées se révèlent globalement insatisfaisantes. La plupart restent en effet théoriques, et se limitent (voir les documents précités) à des éléments visuels simples n'offrant pas à l'utilisateur une réelle interactivité.

De plus, les systèmes décrits dans les documents n°EP 1 814 101, n°US 2007/0024527, n° WO 03/034397 ou n° XP 010662826 ne permettent pas d'intégrer une réalité augmentée en temps réel, c'est-à-dire dans des temps sensiblement indécelables par un utilisateur.

L'invention vise notamment à remédier à ces inconvénients, en proprosant une solution de vidéo enrichie sur terminal mobile pouvant être effectivement mise en pratique dans les réseaux de mobiles et procurant aux utilisateurs une vraie interactivité en temps réel.

De plus, l'invention vise à pouvoir s'adapter sur la plupart des terminaux mobiles standards.

Enfin, l'invention vise à procurer à l'utilisateur dés moyens d'interagir avec l'image de réalité augmentée.

A cet effet, l'invention propose, en premier lieu, un procédé de communication conformément aux revendications 1, 2, et 3.

En second lieu, l'invention propose un système de communication conformément aux revendications 4 et 5.

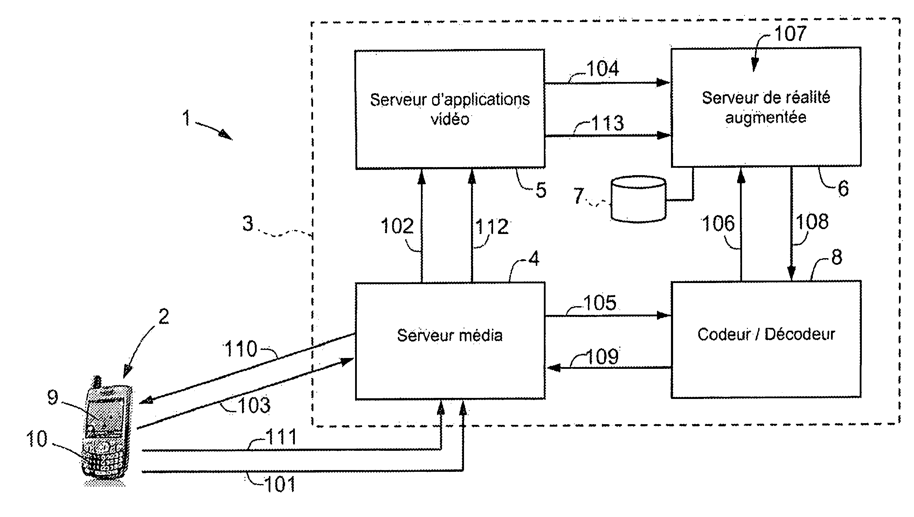

D'autres objets et avantages de l'invention apparaîtront à la lumière de la description faite ci-après en référence au dessin annexé qui illustre une architecture réseau et un procédé de communication conformes à l'invention.

L'architecture réseau **1** représentée comprend un terminal **2** mobile (téléphone mobile, PDA communicant ou Smartphone), relié, via l'interface air, à un système **3** de communication comprenant un serveur média **4**, qui assure l'établissement de sessions médias avec le terminal 2, un serveur 5 d'applications vidéo, relié au serveur média **4** et sur lequel est implémentée une application de vidéo enrichie, un serveur **6** de réalité augmentée relié au serveur **5** d'applications vidéo, une base de données **7** dans laquelle sont mémorisés des objets multimédias, reliée ou intégrée au serveur **6** de réalité augmentée.

Par serveur, on entend ici tout système informatique capable d'intégrer des fonctionnalités ou tout programme informatique capable de mettre en oeuvre un procédé.

Selon un mode de réalisation, le système **3** comprend en outre un codeur/décodeur **8,** relié d'une part au serveur 6 de réalité augmentée et d'autre part au serveur média **4.**

Le serveur média **4** et le terminal mobile **2** sont configurés pour établir entre eux des sessions médias (par exemple suivant le protocole RTP ou H324m), permettant notamment l'échange de données audio/vidéo.

Le terminal mobile **2** est équipé d'une caméra permettant de réaliser une vidéo simple (c'est-à-dire non enrichie) consistant en un film d'une scène réelle se déroulant dans l'environnement du terminal, face à la caméra. Le terminal est en outre équipé d'un écran **9** permettant l'affichage de vidéo, d'un clavier 10 permettant à l'utilisateur d'introduire des commandes, d'un haut-parleur permettant une restitution sonore audibie à distance (c'est-à-dire lorsque le terminal **2** est tenu à bout de bras) ou d'une oreillette pour une écoute discrète.

Les protocoles de transfert de données utilisés seront choisis de préférence pour obtenir une vitesse de transmission des données maximale, afin de minimiser, du point de vue de l'utilisateur, non seulement le délai entre la réalisation de la vidéo à partir du terminal **2** et l'affichage de la vidéo enrichie, mais également le temps de réponse à des interactions. Dans la mesure où l'acquisition d'une vidéo ou le traitement d'une image par un serveur impliquent un délai de traitement incompressible, il est important que les protocoles soient suffisamment rapides pour que le délai total de réception, traitement et renvoi des données ne soit pas décelable par l'utilisateur.

L'enrichissement en temps réel d'une vidéo réalisée sur le terminal **2** est alors réalisé de la manière suivante.

Une session média est d'abord établie **(101)** suivant un protocole temps réel (par exemple RTP ou H324m) entre le terminal **2** et le système **3** de communication, et plus précisément entre le terminal **2** (à l'initiative de celui-ci) et le serveur média **4.** Par nature cette session est bidirectionnelle, et comprend la transmission de données audio et vidéo en temps réel, avec codage des données sortantes (à l'entrée de l'interface air) et décodage des données entrantes (à la sortie de l'interface air) effectuées par le terminal **2.**

Le serveur média **4** signale alors sans délai **(102)** au serveur 5 d'applications vidéo l'ouverture de cette session média, pour commander l'ouverture de l'application de vidéo enrichie.

Au cours de la session média établie entre le terminal **2** et le serveur média **4,** une vidéo non enrichie, comprenant une scène réelle filmée se déroulant face à la caméra, est réalisée à partir du terminal 2.

Cette vidéo est transmise **(103)**, en temps réel, par le terminal **2** au serveur média **3.** Plus précisément, au fur et à mesure que la scène est filmée, le flux vidéo est codé par le terminal **2** suivant une norme de compression vidéo vidéo adéquate (c'est-à-dire, en pratique, adaptée au niveau de compression souhaité : ainsi, pour un niveau de compression relativement faible le terminal pourra utiliser la norme H.263 ; pour des niveaux de compression plus élevés le terminal **2** pourra employer la norme MPEG-4, et pour les très hauts niveaux de compression la norme H.264) et transmis par paquets RTP au serveur média **4.** Ainsi, le flux filmé en permanence par le mobile, à partir de l'établissement de la session, est transmis en continu au système 3 de communication.

Dès que la session média est établie ou sur requête du serveur 5 d'application, le serveur média 4 signale sans délai la réception des premiers paquets RTP de vidéo au serveur **5** d'application vidéo enrichie, dont l'application de vidéo enrichie effectue alors **(104)** une configuration du serveur **6** de réalité augmentée en prévision des opérations décrites ci-après.

La vidéo non enrichie est transmise **(105)** par paquets RTP par le serveur média **4** au codeur/décodeur **8** qui la décompresse et l'adresse **(106)** en temps réel, au format décompressé, au serveur **6** de réalité augmentée. Le format décompressé utilisé correspond par exemple à la norme RFC 4175 de l'IETF, et utilise les définitions colorimétriques RGB (Red Green Blue) ou YUV (également dénommée YCrCb).

Le serveur **6** de réalité augmentée effectue alors **(107)**, en temps réel, une analyse de la scène filmée incluse dans la vidéo. Par exemple, la vidéo est découpée image par image, puis chaque image est comparée avec les images de la base de données **7**, au moyen d'une technique de reconnaissance d'image, telle que la technique des coins de Harris. Une image analysée est donc mise en correspondance biunivoque avec une image préalablement mémorisée dans la base de données **7** et à laquelle est associé au moins un objet média en lien avec le contenu de l'image (et par conséquent en lien avec la scène filmée).

A cet objet média, qui peut être un objet audio, un objet vidéo, du texte, de l'image (par exemple une image de réalité virtuelle 3D), ou encore un objet utilisant une combinaison de ces ressources (par exemple un objet audio/vidéo) est associé un scénario prédéterminé, c'est-à-dire une règle de corrélation avec l'image de la vidéo non enrichie à l'origine de sa sélection. A titre d'exemple, si à l'image d'un véhicule est associée dans la base de données, en tant qu'objet média, une vue virtuelle tridimensionnelle de l'habitacle du véhicule, le scénario peut consister à superposer cette vue à une photographie publicitaire du véhicule, et à permettre la rotation de la vue dans l'espace en temps réel en fonction de l'orientation du terminal au cours de la réalisation de la vidéo. A cet effet, le suivi en temps réel par le serveur **6** de réalité augmentée des positions relatives de la caméra et de l'image analysée permet alors la rotation dans l'espace de la vue virtuelle synchronisée avec l'orientation de la caméra.

Le terminal **2** peut également être muni d'accéléromètres dont les mesures sont incluses en temps réel dans le flux RTP en association avec les données vidéo.

Le ou les objets médias ainsi sélectionnés sont alors ajoutés **(107')** par le serveur **6** de réalité augmentée, en temps réel, à la vidéo non enrichie, pour former une vidéo enrichie au format non compressé.

Le flux de vidéo enrichie, au format non compressé, est transmis **(108)** en temps réel par le serveur **6** de réalité augmentée au codeur/décodeur **8**, qui en assure la compression au format d'échange précédemment employé (H.263, MPEG-4, H.264), puis la transmission **(109),** également en temps réel, au serveur média **4.** Ce dernier relaye alors **(110)** en temps réel la vidéo enrichie au terminal **2**, qui en assure localement la décompression et la restitution en temps réel.

Du point de vue de l'utilisateur, l'enrichissement de la vidéo réalisée est effectué en temps réel, c'est-à-dire sans délai perceptible ou dans un délai inférieur à la seconde. Grâce à la rapidité de trait.e.ment des informations permises par l'architecture qui vient d'être décrite, il est possible d'associer aux objets média additionnels de la vidéo enrichie des fonctionnalités interactives allant au-delà d'une simple adaptation aux mouvements du terminal **2**, et qui peuvent être activées sur commande vocale ou manuelle de l'utilisateur, par exemple par l'intermédiaire de touches du clavier **10,** qui peut être réel ou virtuel. Chaque commande interactive est transmise **(111)** par le terminal **2** au serveur média **4,** qui les relaye **(112)** au serveur 5 d'application vidéo, lequel commande alors **(1113)**, via son application de vidéo enrichie, une mise à jour des propriétés apparentes de l'objet média au sein du serveur **6** de réalité augmentée, en fonction du scénario préétabli.

L'utilisateur peut ainsi agir directement sur l'objet additionnel en modifiant ses propriétés : couleur, texture, position, etc., ou se servir de fonctionnalités proposées par l'objet lui-même : lecture de messages publicitaires, activation d'hyperliens, etc. A titre d'exemple, un utilisateur peut filmer un véhicule et recevoir, en retour, une vue tridimensionnelle du véhicule que l'utilisateur peut manipuler à sa guise (rotation, ouverture des portières, examen de l'habitacle, modification de la couleur, etc.), éventuellement associée à des informations commerciales éventuellement interactives : tarifs, coordonnées des concessionnaires, délais de livraison, lien vers un site Web commercial, etc.

Selon un mode particulier de réalisation, certaines des fonctionnalités décrites ci-dessus sont intégrées dans le terminal mobile **2**, de façon à diminuer les retards dus à des temps de transfert de données. Ainsi., le terminal **2** mobile peut intégrer par exemple les fonctions de codage/décodage, de façon à envoyer au système 3 de communication le flux vidéo déjà compressé et donc éventuellement plus rapidement.

La solution qui visent d'être décrite propose ainsi une application effective, utilisable au quotidien, de la réalité augmentée, pouvant être mise en oeuvre sur les terminaux mobiles de troisième génération sans que des fonctionnalités particulières supplémentaires soient implémentées dans ceux-ci, l'essentiel du traitement étant réalisé au sein du système de communication distant, dont la configuration permet de réaliser les opérations d'enrichissement de la vidéo en temps réel.

Cette solution permet également d'accéder, à partir de la vidéo enrichie, à des portails de e-commerce.

Ce procédé trouve, notamment, application dans la diffusion d'un contenu publicitaire destiné à un terminal mobil.e. En effet, suite à l'analyse de la scène filmée par le terminal mobile **2,** l'objet média additionnel en lien avec la scène filmée peut être à vocation publicitaire.

A titre d'exemple non limitatif, si la scène filmée par le terminal mobile **2** est une affiche imprimée d'un film, l'objet média additionnel correspondant peut être une séquence vidéo publicitaire de ce film, contenant ou non la scène filmée. Récupérer la date de projection de ce film, effectuer une réservation et/ou demander des informations complémentaires sur ce film sont des exemples de fonctionnalités interactives qui peuvent être associées au contenu média publicitaire et être activées depuis le terminal mobile **2.**

Comme second exemple, si ia scène réelle filmée par le terminal mobile 2 comprend une véhicule automobile, plusieurs objets médias publicitaires additionnels peuvent être envisagés; tel qu'un contenu publicitaire d'un nouveau véhicule, des accessoires et/ou des pièces automobile, des services automobiles.

Dans ce conteste, les fonctionnalités interactives associées à un objet média additionnel publicitaire peuvent être à but culturel, informatif et/ou commercial.

Dans la mesure où les opérations d'enrichissement de la vidéo sont effectuées par le système **3** de communication, ce dernier peut aussi servir pour collecter des informations concernant ces opérations. A titre d'exemple, ces informations peuvent comprendre :
- la durée moyenne d'une session de communication entre une terminal mobile **2** et le système **3** de communication portant sur une vidéo enrichie donnée ;
- le nombre de sessions de communication concernant une vidéo enrichie donnée par unité de temps;
- le nombre de sessions de communication concernant une vidéo enrichie donnée par région ;
- le nombre de sessions de communication déjà établies avec des utilisateurs appartenant à une population initialement visée :
- des informations sur les utilisateurs des terminaux mobiles 3 (numéro de téléphone, sexe, âge, nom, prénom, etc).

Ces informations permettent de fournir des données statistiques très utiles pour les propriétaires des objets média additionnels à but commercial.

## Revendications

1. Procédé de communication comprenant l'affichage, sur un terminal **(2)** mobile communiquant équipé d'une caméra, d'une vidéo enrichie comprenant une scène réelle filmée au sein de laquelle sont incrustés des éléments audiovisuels additionnels en lien avec ladite scène, ce procédé comprenant les opérations suivantes :
- établissement d'une session média entre le terminal mobile **(2)** et un système **(3)** de communication distant comprenant un serveur media (4), un serveur d'applications vidéo (5), un serveur de réalité augmentée (6) et une base de données d'objets médias (7), les objets médias pouvant être un objet audio, un objet vidéo, du texte, de l'image ou un objet utilisant une combinaison de ces ressources;
- réalisation par le terminal, au moyen de la caméra, d'une vidéo non enrichie comprenant ladite scène réelle filmée ;
- transmission de la vidéo non enrichie, en temps réel, par le terminal mobile **(2)** au système **(3)** de communication ;
- réception de la vidéo non enrichie par le système de communication ;
- analyse en temps réel de la scène filmée, au sein du système **(3)** de communication ;
- sélection, au sein de la base de donnèes (7) du système **(3)** de communication, d'un ou plusieurs objets médias additionnels en lien avec la scène filmée ;
- association d'au moins une fonctionnalité interactive pouvant être activée depuis le terminal à au moins un objet parmi lesdits objets médias additionnels ;
- ajout à la vidéo non enrichie de l'objet ou des objets médias additionnels ainsi sélectionnés, pour former une vidéo enrichie ;
- transmission de la vidéo enrichie, en temps réel, par le système **(3)** de communication au terminal mobile **(2) ;**
- restitution par le terminal mobile **(2),** en temps réel, de la vidéo enrichie ;
- transmission en temps réel par le terminal mobile **(2)** au système **(3)** de communication de toute commande, effectuée depuis ledit terminal **(2)** par action directe de l'utilisateur sur un objet média additionnel auquel une fonctionnalité interactive est associée ;
- réception de la dite opération de commande par le système **(3)** de communication ;
- analyse de la commande par le système **(3)** de communication ;
- mise à jour des propriétés apparentes dudit objet média dans le système (**3**) de communication conformément à la commande reçue, selon un scénario préétabli ;
- transmission de l'objet média dont les propriétés apparentes ont ainsi été mises à jour, en temps réel, par le système (**3**) de communication au terminal (**2**) ;
- restitution par le terminal (**2**), en temps réel, de l'objet mis à jour ;
- affichage sur le terminal (**2**), en temps réel, de l'objet média mis à jour.

2. Procédé selon la revendication 1, qui comprend, entre la réception de la vidéo enrichie par le système de communication (**3**) et l'analyse de la scène filmée, une opération de décodage de la vidéo, l'analyse étant réalisée à partir d'un format vidéo décompressé.

3. Procédé selon la revendication 1 ou 2, dans lequel l'opération de commande est activée par l'intermédiaire d'un clavier (10) du terminal (**2**).

4. Système de communication (**3**) comprenant :
- un serveur média (**4**), propre à établir une session média avec un terminal mobile (**2**) équipé d'une caméra filmant une scène réelle ;
- un serveur (**5**) d'applications vidéo, relié au serveur média (**4**) et sur lequel est implémentée une application de vidéo enrichie ;
- une base de données (**7**) d'objets médias, les objets médias pouvant être un objet audio, un objet vidéo, du texte, de l'image ou un objet utilisant une combinaison de ces ressources ;
- un serveur (**6**) de réalité augmentée, relié au serveur (**5**) d'applications vidéo et à ladite base de données (**7**), programmé, sur commande du serveur (**5**) d'applications vidéo, pour :
- effectuer une analyse d'images au sein d'une vidéo non enrichie reçue du terminal mobile (**2**) via le serveur média (**4**) ou une analyse de commande associé à un objet média additionnel ;
- sélectionner, au sein de la base de données (**7**), au moins un objet média additionnel en lien avec la scène filmée ;
- associer au moins une fonctionnalité interactive pouvant être activée depuis le terminal audit objet média ;
- ajouter à la vidéo non enrichie l'objet ou les objets médias additionnels ainsi sélectionnés, pour former une vidéo enrichie ;
- transmettre la vidéo enrichie, en temps réel, au terminal mobile (**2**) ;
- à réception d'une commande effectué depuis ledit terminal (**2**) par action directe de l'utilisateur sur ledit objet média, mettre à jour des propriétés apparentes d'un objet média conformément à la commande reçue, selon un scénario préétabli ;
- transmettre au terminal (**2**) l'objet média dont les propriétés apparentes ont ainsi été mises à jour.

5. Système (**3**) de communication selon la revendication 4, qui comprend en outre un codeur/décodeur (**8**) relié au serveur (**6**) de réalité augmentée et au serveur média (**4**), configuré pour effectuer une décompression d'une vidéo non enrichie reçue du terminal mobile (**2**) via le serveur média (**4**), ou réciproquement compresser une vidéo enrichie à transmettre au terminal (**2**) via le serveur média (**4**).

## Claims

1. A communication method comprising the display, on a communicating mobile terminal (2) equipped with a camera, of an enhanced video comprising a real filmed scene within which are embedded additional audiovisual elements connected with said scene, which method comprises the following operations:
- the establishing of a media session between the mobile terminal (2) and a remote communication system (3) comprising a media server (4), a video application server (5), an augmented reality server (6) and a media object database (7), the media objects potentially being an audio object, a video object, text, images, or an object using a combination of these resources;
- the filming by the terminal, by means of the camera, of a non-enhanced video comprising said real filmed scene;
- the transmission of the non-enhanced video, in real time, by the mobile terminal (2) to the communication system (3);
- the receipt of the non-enhanced video by the communication system; the real-time analysis of the filmed scene, within the communication system (3);
- the selection, within the database (7) of the communication system (3), of one or more additional media objects connected with the filmed scene;
- the association of at least one interactive functionality that may be activated from the terminal with at least one object from among said additional media objects;
- the adding of the object or additional media objects thereby selected to the non-enhanced video, in order to form an enhanced video;
- the real-time transmission of the enhanced video by the communication system (3) to the mobile terminal (2);
- the real-time playback of the enhanced video by the mobile terminal (2);
- the real-time transmission by the mobile terminal (2) to the communication system (3) of any command made from said terminal (2) via a direction action from the user on an additional media object with which an interactive functionality had been associated;
- the receipt by the communication system (3) of said command operation;
- the analysis by the communication system (3) of the command;
- the updating of said media object's apparent properties within the communication system (3), in accordance with the received command, according to a preset scenario;
- the transmission of the media object whose apparent properties have been updated in this way, in real time, by the communication system (3) to the terminal (2);
- the real-time playback of the updated media object by the terminal (2);
- the real-time display of the updated media object by the terminal (2).

2. A method according to claim 1, which comprises, between the receipt of the enhanced video by the communication system (3) and the analysis of the filmed scene, a video decoding operation, with the analysis being carried out based on an uncompressed video format.

3. A method according to claim 1 or 2, wherein the command operation is activated by means of a keyboard (10) of the terminal (2).

4. A communication system (3) comprising:
- a media server (4), capable of establishing a media session with a mobile terminal (2) equipped with a camera filming a real scene;
- a video application server (5), linked to the media server (4), and on which is implemented an enhanced video application;
- a media object database (7), the media objects potentially being an audio object, a video object, text, images, or an object using a combination of these resources;
- an augmented reality server (6) linked to the video application server (5) and to said database (7), program, upon being commanded by the video application server, to:
- conduct an image analysis within a non-enhanced video received from the mobile terminal (2) via the media server (4) or a command analysis associated with an additional media object;
- select, within the database (7), at least one additional media object connected with the filmed scene;
- associate at least one interactive functionality that may be activated from the terminal with said media object;
- add the object or additional media objects thereby selected to the non-enhanced video, in order to form an enhanced video;
- transmit the enhanced video, in real time, to the mobile terminal (2);
- upon receiving the command made from said terminal (2) by a direct action from the user on said media object, update the apparent properties of the media object in accordance with the received command, according to a preset scenario;
- transmit to the terminal (2) the media object whose apparent properties have been updated in this way.

5. A communication system (3) according to claim 4, which further comprises a coder/decoder (8) linked to the augmented reality server (6) and to the media server (4), configured to decompress a non-enhanced video received from the mobile terminal (2) via the media server (4), or conversely, compressing an enhanced video to be transmitted to the terminal (2) via the media server (4).

## Patentansprüche

1. Kommunikationsverfahren, umfassend die Anzeige, auf einem mit einer Kamera ausgestatteten kommunizierenden mobilen Endgerät (2), eines angereicherten Videos, welches eine gefilmte reelle Szene, in die mit der besagten Szene zusammenhängende zusätzliche audiovisuelle Elemente eingeblendet sind, enthält, wobei das Verfahren die folgenden Schritte umfasst:
- Aufbau einer Mediensitzung zwischen dem mobilen Endgerät (2) und einem entfernten Kommunikationssystem (3), welches einen Medienserver (4), einen Video-Anwendungsserver (5), einen Augmented-Reality-Server (6) und eine Medienobjekt-Datenbank (7) umfasst, wobei die Medienobjekte ein Audio-Objekt, ein Video-Objekt, ein Text, ein Bild oder ein eine Kombination dieser Ressourcen verwendendes Objekt sein können;
- Erstellung durch das Endgerät, anhand einer Kamera, eines nicht angereicherten Videos, welches die besagte gefilmte reelle Szene enthält;
- Übertragung des nicht angereicherten Videos, in Echtzeit, von dem mobilen Endgerät (2) an das Kommunikationssystem (3);
- Empfang des nicht angereicherten Videos an dem Kommunikationssystem;
- Analyse der gefilmten Szene in Echtzeit innerhalb des Kommunikationssystems (3);
- Auswahl, innerhalb der Datenbank (7) des Kommunikationssystems (3), eines oder mehrerer mit der gefilmten Szene zusammenhängende zusätzliche Medienobjekte;
- Assoziation mindestens einer interaktiven Funktionalität, welche über das Endgerät aktiviert werden kann, mit mindestens einem Objekt der besagten zusätzlichen Medienobjekte;
- Hinzufügung des oder der derart ausgewählten zusätzlichen Medienobjekte(s), um ein angereichertes Video zu erstellen;
- Übertragung des angereicherten Videos, in Echtzeit, durch das Kommunikationssystem (3) an das mobile Endgerät (2) ;
- Wiedergabe durch das mobile Endgerät (2), in Echtzeit, des angereicherten Videos;
- Übertragung, in Echtzeit, durch das mobile Endgerät (2) an das Kommunikationssystems, jedes über das besagte Endgerät (2) durch direkten Eingriff des Benutzers auf einem zusätzlichen Medienobjekt, mit welchem eine interaktive Funktionalität assoziiert ist, ausgeführten Steuervorgangs;
- Empfang des besagten Steuervorgangs an dem Kommunikationssystem (3);
- Analyse des Steuervorgangs durch das Kommunikationssystem;
- Aktualisierung der sichtbaren Eigenschaften des besagten Medienobjektes im Kommunikationssystem (3) gemäß dem empfangenen Steuervorgang, nach einem vorher festgelegten Szenario;
- Übertragung des Medienobjektes, dessen sichtbare Eigenschaften aktualisiert worden sind, in Echtzeit durch das Kommunikationssystem (3) an das Endgerät (2);
- Wiedergabe an dem Endgerät (2), in Echtzeit, des aktualisierten Objektes;
- Anzeige am Endgerät (2), in Echtzeit, des aktualisierten Medienobjektes.

2. Verfahren nach Anspruch 1, welches zwischen dem Empfang des angereicherten Videos am Kommunikationssystem (3) und der Analyse der gefilmten Szene einen Video-Decodierungsvorgang umfasst, wobei die Analyse ausgehend von einem dekomprimierten Videoformat erfolgt.

3. Verfahren nach Anspruch 1 oder 2, wobei der Steuervorgang über eine Tastatur (10) des Endgeräts (2) aktiviert wird.

4. Kommunikationssystem (3), umfassend:
- Einen Medienserver (4), welcher geeignet ist, eine Mediensitzung mit einem mit einer Kamera, welche eine reelle Szene filmt, ausgestatteten Endgerät (2) aufzubauen;
- einen Video-Anwendungsserver (5), welcher mit dem Medienserver (4) verbunden ist, und auf welchem eine Anwendung eines angereicherten Videos implementiert wird;
- eine Medienobjekt-Datenbank (7), wobei die Medienobjekte ein Audio-Objekt, ein Video-Objekt, ein Text, ein Bild oder ein eine Kombination dieser Ressourcen verwendendes Objekt sein können;
- einen Augmented-Reality-Server (6), welcher mit dem Video-Anwendungsserver (5) und der besagten Datenbank (7) verbunden und für das Ausführen, auf Anweisung des Video-Anwendungsservers, der folgenden Schritte programmiert ist:
- Durchführen einer Analyse von Bildern innerhalb eines über den Medienserver (4) von dem Endgerät empfangenen nicht angereicherten Videos, oder einer Analyse des mit einem zusätzlichen Medienobjekt assoziierten Steuervorgangs;
- Auswählen, innerhalb der Datenbank (7), mindestens eines mit der gefilmten Szene zusammenhängenden zusätzlichen Medienobjektes;
- Assoziieren mindestens einer interaktiven Funktionalität, welche über das Endgerät aktiviert werden kann, mit dem besagten Medienobjekt;
- Hinzufügen des oder der ausgewählten zusätzlichen Medienobjekte(s), um ein angereichertes Video zu erstellen;
- Übertragen des angereicherten Videos, in Echtzeit, an das mobile Endgerät (2) ;
- Bei Empfang eines über das besagte Endgerät (2) durch direkten Eingriff des Benutzers auf dem besagten Medienobjekt ausgeführten Steuervorgangs, Aktualisieren der sichtbaren Eigenschaften eines Medienobjektes gemäß dem empfangenen Steuervorgang nach einem vorher festgelegten Szenario;
- Übertragen des Medienobjektes, dessen sichtbare Eigenschaften aktualisiert worden sind, an das Endgerät.

5. Kommunikationssystem nach Anspruch 4, welches weiterhin einen mit dem Augmented-Reality-Server (6) und dem Medienserver (4) verbundenen Codierer/Decodierer (8) umfasst, welcher für das Dekomprimieren eines über den Medienserver (4) von dem Endgerät (2) empfangenen nicht angereicherten Videos oder wechselweise für das Komprimieren eines über den Medienserver (4) an das Endgerät (2) zu übertragenden angereicherten Videos konfiguriert ist.
